# EUROPEAN PATENT APPLICATION

(11) **EP 4 773 616 A1**
(43) Date of publication of application: **08.07.2026**
(21) Application number: 24858764.4
(22) Date of filing: 30.08.2024
(51) Int. Cl.: H04N 21/472

(54) **VIDEO EDITING METHOD AND APPARATUS, ELECTRONIC DEVICE, AND STORAGE MEDIUM**

(30) Priority: 31.08.2023 CN 202311118960
(71) Applicant: Beijing Zitiao Network Technology Co., Ltd., Beijing 100190 (CN)
(72) Inventor: CHEN, Shiting, Beijing 100028 (CN); BAI, Yinong, Beijing 100028 (CN); ZHENG, Ke, Beijing 100028 (CN); WANG, Jiaxin, Beijing 100028 (CN); JIA, Xinyue, Beijing 100028 (CN)
(74) Representative: Grünecker Patent- und Rechtsanwälte PartG mbB
(86) International application number: PCT/CN2024/116130
(87) International publication number: WO 2025/045235

(57) **Abstract**

Embodiments of the disclosure provide a video editing method, apparatus, electronic device and storage medium. The method includes: obtaining a video editing template, and obtaining an image material for filling a segment to be filled in the video editing template. The image material is used to form a video segment of a video editing draft, at least a part of the image material is a predetermined image material, the predetermined image material is used to fill a segment to be filled in the video editing template that has not been filled by a user. A video editing result is generated based on the video editing template and the image material. By adopting the above technical solution, the embodiments of the disclosure can enrich the generation manner of the video editing result, and reduce the generation difficulty of the video editing result.

## Description

This application claims priority to Chinese Patent Application No. 2023111189603, filed August 31, 2023, entitled "VIDEO EDITING METHOD, APPARATUS, ELECTRONIC DEVICE AND STORAGE MEDIUM", the entire contents of which are incorporated herein by reference.

### FIELD

Embodiments of the present disclosure relate to the field of computer technologies, and in particular, to a video editing method, apparatus, electronic device and storage medium.

### BACKGROUND

Currently, the user may fill video materials in each position to be filled of a video editing template, and the video may be generated by performing editing based on the filled video material after the filling is completed. However, the editing manner of the video is relatively monotonous, and the editing difficulty is high.

### SUMMARY

According to a first aspect, embodiments of the present disclosure provide a video editing method, including: obtaining a video editing template, and obtaining an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user; and generating a video editing result based on the video editing template and the image material.

According to a second aspect, embodiments of the present disclosure further provide a video editing apparatus, including: an obtaining module, configured to obtain a video editing template, and obtain an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user; and an effect generation module, configured to generate a video editing result based on the video editing template and the image material.

In a third aspect, embodiments of the present disclosure further provide an electronic device, including: one or more processors; and a memory, configured to store one or more programs, the one or more programs, when executed by the one or more processors, causing the one or more processors to implement the video editing method according to the embodiments of the present disclosure.

In a fourth aspect, embodiments of the present disclosure further provide a computer-readable storage medium having a computer program stored thereon, the program, when executed by a processor, implementing the video editing method according to the embodiments of the present disclosure.

### BRIEF DESCRIPTION OF DRAWINGS

The above and other features, advantages, and aspects of various embodiments of the present disclosure will become more apparent from the following detailed description in connection with the accompanying drawings. Throughout the drawings, the same or similar reference numbers refer to the same or similar elements. It should be understood that the drawings are schematic, and original components and elements are not necessarily drawn to scale.
FIG. 1 is a schematic flowchart of a video editing method according to embodiments of the present disclosure;
FIG. 2 is a schematic presentation diagram of an editing interface according to embodiments of the present disclosure;
FIG. 3 is a schematic presentation diagram of another editing interface according to embodiments of the present disclosure;
FIG. 4 is a schematic flowchart of another video editing method according to embodiments of the present disclosure;
FIG. 5 is a schematic presentation diagram of a second-level editing item of a first-level video segment editing item according to embodiments of the present disclosure;
FIG. 6 is a schematic presentation diagram of a second-level editing item of a first-level audio editing item according to embodiments of the present disclosure;
FIG. 7 is a schematic presentation diagram of a second-level editing item of a first-level text editing item according to embodiments of the present disclosure;
FIG. 8 is a schematic presentation diagram of a second-level editing item of a first-level filter editing item according to embodiments of the present disclosure;
FIG. 9 is a schematic presentation diagram of a second-level editing item of a first-level sticker editing item according to embodiments of the present disclosure;
FIG. 10 is a schematic presentation diagram of a material filling interface according to embodiments of the present disclosure;
FIG. 11 is a schematic diagram of a size adjustment of a sticker panel according to embodiments of the present disclosure;
FIG. 12 is a structural block diagram of a video editing apparatus according to embodiments of the present disclosure;
FIG. 13 is a schematic structural diagram of an electronic device according to embodiments of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein. In contrast, these embodiments are provided for a more thorough and complete understanding of the present disclosure. It should be understood that the drawings and embodiments of the present disclosure are for illustrative purposes only and are not intended to limit the scope of the present disclosure.

It should be understood that the steps recited in the method embodiments of the present disclosure may be performed in different orders, and/or in parallel. Further, the method embodiments may include additional steps and/or omit performing the illustrated steps. The scope of the present disclosure is not limited in this respect.

As used herein, the term "including" and variations thereof are open-ended, i.e., "including but not limited to". The term "based on" is "based at least in part on". The term "one embodiment" means "at least one embodiment"; the term "another embodiment" means "at least one further embodiment"; the term "some embodiments" means "at least some embodiments". The relevant definitions of other terms will be given below.

It should be noted that the concepts such as "first" and "second" mentioned in this disclosure are merely used to distinguish different apparatuses, modules, or units, and are not intended to limit the order of functions performed by the apparatuses, modules, or units or the mutual dependency relationship.

It should be noted that the modification of "a" and "a plurality" mentioned in this disclosure is illustrative and not limiting, and those skilled in the art should understand that it should be understood as "one or more" unless the context clearly indicates otherwise.

The names of messages or information exchanged between a plurality of apparatuses in embodiments of the present disclosure are for illustrative purposes only and are not intended to limit the scope of such messages or information.

It may be understood that, before the technical solutions disclosed in the embodiments of the present disclosure are used, the types, the usage scope, the usage scenario and the like of personal information related to the present disclosure should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware, such as electronic device application, server or storage medium etc., executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and a process of obtaining a user's authorization is merely illustrative, and does not constitute a limitation on implementations of the present disclosure, and other manners of meeting related laws and regulations may also be applied to implementations of the present disclosure.

The embodiments of the present disclosure provide a video editing method, apparatus, electronic device and storage medium to enrich editing manners of the video, and to reduce the editing difficulty in generating the video by adopting the template.

According to the video editing method, apparatus, the electronic device and the storage medium provided by the embodiments of the present disclosure, a video editing template is obtained, an image material for filling a segment to be filled in the video editing template is obtained, the image material is used to form a video segment of a video editing draft, at least a part of the image material is a predetermined image material, the predetermined image material is used to fill a segment to be filled in the video editing template that has not been filled by a user; and a video editing result is generated based on the video editing template and the image material. By adopting the above technical solution, the video editing result can be generated according to the image material filled in each segment to be filled of the video editing template under a condition that the user has not added the image material in at least part of the segments to be filled, the generation manner of the video editing result can be enriched, and the generation difficulty of the video editing result is reduced.

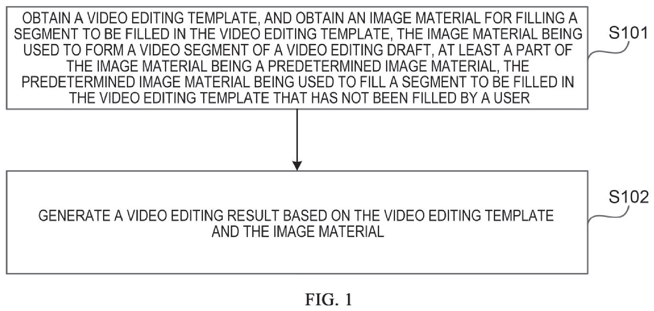

FIG. 1 is a schematic flowchart of a video editing method according to embodiments of the present disclosure. The method may be performed by a video editing apparatus, wherein the apparatus may be implemented by software and/or hardware, and may be configured in an electronic device. Typically, the apparatus may be configured in a cell phone or a tablet computer. The video editing method provided by the embodiments of the present disclosure is suitable for a scenario for generating the video preview effect when the user has not filled the image material in at least part of the segments to be filled in the template. For example, a scenario for generating a new video or performing a preview of a video to be generated in the situation where only part of the segments to be filled in the template are added with the image material. As shown in FIG. 1, the video editing method provided in this embodiment may include the following steps:
S101: obtain a video editing template, and obtain an image material for filling a segment to be filled in the video editing template. The image material is used to form a video segment of a video editing draft, at least a part of the image material is a predetermined image material. The predetermined image material is used to fill a segment to be filled in the video editing template that has not been filled by a user.

The video editing template may be a template for editing and generating a video. The video editing template is equivalent to an incomplete editing draft. Compared with a common video editing draft, the video editing template may specify that some video segments on the video editing track are required to be filled with the image material by the user. The video editing template may include editing information and may include a part of materials that do not need to be filled by the user. For example, a material filled in some video segments may be a video segment carried by the template that is not required to be filled by the user or even not supported for filling by a user, and the editing information at least indicates a video segment that needs to be filled with an image material. After the image material is filled, a complete video editing draft may be formed. Therefore, when a preview is performed, image rendering may be performed based on the editing effect of the video editing draft to obtain the preview image. When generating the video, an editing processing may be performed on the image material based on the editing information to synthesize the video.

The video editing template may include one or more segments to be filled required to be filled with the image material by the user. The segment to be filled may be understood as a slot for the user to fill the image material. The image material may be considered as a video material of an image type, such as a video material or a picture material. At least part of the segments to be filled in the video editing template are segments to be filled that have not been filled by the user. In other words, the video editing template may include a segment to be filled that has not been filled by the user, and may or may not include a segment to be filled in which the image material has been filled by the user.

In this embodiment, in a situation where the user has not filled at least part of the segments to be filled in the video editing template with the image material, the video editing template and the image material used to fill the segment to be filled in the video editing template may be obtained.

For example, in the situation where the user has not filled at least part of the segments to be filled in the video editing template with the image material (for example, in the situation where the user only fills part of the segments to be filled with the image material or the user does not fill all the segments to be filled with the image material), the video editing template and the image material used for filling the segment to be filled in the video editing template may be obtained in response to the triggering operation for indicating a generation of the video editing result by the user. Therefore, the video editing result is subsequently generated according to the obtained video editing template and the image material.

Here, the triggering operation for indicating the generation of the video editing result is not limited. For example, the triggering operation for indicating a generation of the video editing result may be a preview operation for indicating a generation of a video editing draft and displaying a preview image of the video segment in the video editing draft, or may be a video generating operation for indicating a generation of the target video.

S102: generate a video editing result based on the video editing template and the image material.

Specifically, after obtaining the video editing template and the image material for filling the segment to be filled in the video editing template, the video editing result may be generated according to the obtained video editing template and the image material.

When generating the video editing result, for example, the video editing draft may be generated according to the obtained video editing template and the image material, and a preview picture of the video segment in the video editing draft may be presented. Alternatively, the editing processing is performed on the image material filled in the video editing template according to the obtained editing information of the video editing template to synthesize the target video.

In this embodiment, in a situation where a segment to be filled in the video editing template that has not been filled with the image material by the user is present, the segment to be filled that has not been filled with the image material by the user is filled with the predetermined image material. In this way, the user can be supported in generating the video editing result in the situation where a segment to be filled that is unfilled is present without requiring the user to fill all of each segment to be filled with the image material. Therefore, the generation manner of the video editing result can be enriched, and the generation difficulty of the video editing result is reduced.

In this embodiment, the generated video editing result may be preset. Alternatively, the video editing result may also be determined based on the triggering operation of the user for indicating a generation of the video editing result, which is not limited in this embodiment. The process of determining the video editing result is described below based on the manner in which the video editing result is determined based on the triggering operation of the user for instructing a generation of the video editing result. The triggering operation of the user for indicating a generation the video editing result may include, for example, a preview operation or a video generation operation. Different video editing results may be generated when the triggering operation performed by the user for indicating a generation of the video editing result is different.

In some implementations, when obtaining the image material for generating the video editing draft (for example, when the triggering operation performed by the user for indicating a generation of the video editing result is a preview operation), after the video editing template and the image material for filling the segment to be filled in the video editing template are obtained, the video editing draft is generated according to the obtained video editing template and the image material. A preview picture of the video segment in the video editing draft may also be presented. For example, the preview picture of the image material added in each of the segments to be filled obtained by rendering may be sequentially presented according to an arrangement sequence of each segment to be filled in the video editing template, for viewing by the user. In this scenario, optionally, the video editing result includes the preview picture. The process of generating a video editing result according to the video editing template and the image material includes: generating the video editing draft based on the video editing template and the image material, and presenting the preview picture of the video segment in the video editing draft.

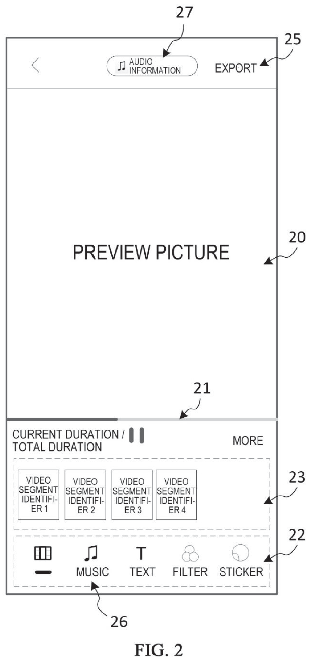

In the above embodiment, the presentation manner of the preview picture is not limited. For example, a preview picture obtained by rendering each image material may be presented in an editing interface. For example, the preview picture obtained by rendering each image material is presented in the first area 20 of the editing interface, as shown in FIG. 2, to meet the preview requirement and the editing requirement of the user at the same time. In this scenario, optionally, the presenting the preview picture of the video segment in the video editing draft includes: displaying an editing interface, and presenting, at a first area 20 of the editing interface, the preview picture of the video segment in the video editing draft.

The editing interface may be an interface for a user to edit a video segment in the video editing draft. The editing interface may include an area, that is, the first area 20, for presenting the preview picture of the video segment in the video editing draft. Optionally, as shown in FIG. 2, a preview progress bar 21 is further presented in the first area 20. The preview progress bar 21 is configured to indicate a current preview progress. Compared with individually presenting the preview progress bar 21 outside the first area 20, the occupation of the preview progress bar 21 on the presentation space of the editing interface can be reduced. The preview progress bar 21 may correspond to a video segment corresponding to the currently displayed preview picture, or the preview progress bar 21 may correspond to the video editing draft. In other words, the preview progress bar 21 may be a progress bar corresponding to a single video segment, or the preview progress bar 21 may be a progress bar corresponding to a video editing draft. The following description is made taking the preview progress bar 21 as the progress bar corresponding to the video editing draft as an example.

Optionally, the editing interface further includes a second area and/or a third area. At least one first-level editing item is presented in the second area. An object identifier of at least one object to be edited is presented in the third area. The at least one object to be edited corresponds to a first-level editing item in a selected state in the at least one first-level editing item.

As shown in FIG. 2, the editing interface may further include a second area 22 and/or a third area 23. The second area 22 may be an area for presenting an editing item in an editing interface. The editing item may include a first-level editing item and/or a second-level editing item, which may be used to edit a video segment in the video editing draft. For example, different first-level editing items may be used to edit different types of objects to be edited. The third area 23 may be an area for presenting an object identifier of an object to be edited. The object to be edited may be understood as an object available for editing by the user, and may include an object that has been added to the video editing template and/or a candidate object for selection of the user and to be added to the video editing template. The type of the objects to be edited is not limited. For example, the object to be edited may include a video segment in the video editing draft, a candidate background audio material available for user selection, text that has been added in the video editing draft, a filter or a sticker, and the like. The object identifier of the object to be edited may be considered as an identifier of the object to be edited, for example, a video segment identifier of the video segment, an audio identifier of the candidate background audio, a text identifier, a filter identifier, and/or a sticker identifier.

For example, upon switching to and entering the editing interface in response to the preview operation, the preview picture of the video segment in the video editing draft and the preview progress bar 21 of the video editing draft may be sequentially presented in the first area 20 of the editing interface. At least one first-level editing item is presented in the second area 22 of the editing interface, and a certain first-level editing item may be displayed as a selected state. An object identifier of the object to be edited corresponding to the first-level editing item in the selected state is presented in the third area 23 of the editing interface. For example, the first-level video segment editing item may be displayed as a selected state, and the video segment identifier of the at least one video segment in the video editing draft is presented in the third area 23, as shown in FIG. 2.

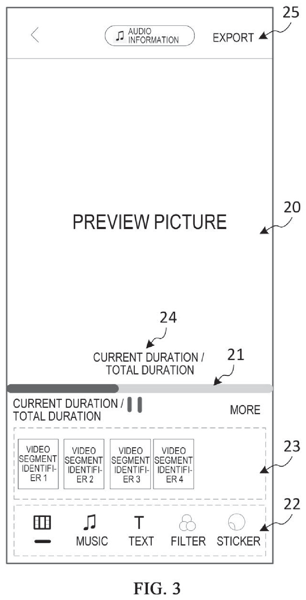

In this embodiment, the user may adjust the preview progress by performing a progress adjustment operation. Given that during the process of performing the progress adjustment operation, the user may generally position their gaze at the first area 20. Therefore, in the process of performing the progress adjustment operation by the user, preview progress information 24 to which the progress is adjusted to that is currently indicated by the progress adjustment operation may be further additionally presented in a predetermined position of the first area 20, as shown in FIG. 3. Therefore, it may facilitate the user to adjust the preview progress expected to be adjusted by the user more quickly. When the execution of progress adjustment operation is completed, the additional presentation of the preview progress information 24 in the first area 20 is canceled.

In this situation, optionally, after displaying the editing interface, the method further includes: presenting, in response to a progress adjustment operation for the video editing draft, preview progress information corresponding to the progress adjustment operation at a predetermined position of the first area in an execution process of the progress adjustment operation, and canceling, in response to an execution of the progress adjustment operation being completed, a presentation of the preview progress information.

The preview progress information may be information of a current preview progress to which the progress adjustment operation currently indicates to adjust to. For example, a current duration to which the progress adjustment operation currently indicates to adjust to. The preview progress information may further include a total duration of the video editing draft. The current duration may be understood as a time node corresponding to the current preview progress in the video editing draft. The execution manner of the progress adjustment operation is not limited, for example, the progress adjustment operation may be performed in a manner of dragging a progress identifier in the preview progress bar. The progress identifier in the preview progress bar may be used to indicate the current preview progress, and when the progress identifier is located at different positions of the preview progress, the current preview progress indicated by the progress identifier is different.

It may be understood that preview progress information may or may not be presented outside the first area. When the preview progress information is presented outside the first area, the preview progress information presented outside the first area may be maintained to be presented during the process of execution of the progress adjustment operation, as shown in FIG. 3. Presentation of the preview progress information presented outside the first area may also be canceled. When the execution of progress adjustment operation is completed, the preview progress information presented outside the first area may be re-presented.

In some implementations, when the image material is obtained to generate the target video (for example, when the triggering operation performed by the user for indicating a generation of the video editing result is a video generation operation), the obtained image material may be edited based on the editing information of the video editing template after the video editing template and the image material used to fill the segment to be filled in the video editing template are obtained. Generating the target video in this manner may facilitate the user to view, save, or post the generated target video. In this situation, optionally, generating the video editing result based on the video editing template and the image material includes: generating a target video by processing the image material with the video editing template. The target video may be a video finally generated based on the image material added to the video editing template. The video generation operation may be a triggering operation for indicating a generation of a video based on the image material added to the video editing template, for example, an operation of triggering a material filling interface or an export control 25 (as shown in FIG. 2) presented in the editing interface.

In this embodiment, when there is a segment to be filled in the video editing template that has not been added with the image material by the user, the current application program may add the predetermined image material to the segment to be filled which is not added with the image material by the user. In this way, it is ensured that the video editing draft can be generated based on the video editing template and the video segment in the generated video editing draft can be previewed, or the target video can be generated based on the video editing template even when the user does not add the image material to all the segments to be filled.

In some embodiments, the predetermined image material includes a first predetermined image material and/or a second predetermined image material. The first predetermined image material corresponds to an original material sample filled in the segment to be filled, and the second predetermined image material is a set image material.

The original material sample may be an image material sample originally added in the video editing template as an example for the user. The first predetermined image material may be a predetermined image material corresponding to the original material sample, for example, a predetermined image material obtained based on the original material sample. The second predetermined image material may be a pre-set image material that may be filled into different segments to be filled.

In the foregoing implementation, when the image material used to fill the segment to be filled in the video editing template is obtained, the predetermined image material may be filled into the segment to be filled in the video editing template that has not been filled with an image material by the user. The filled predetermined image material may be set as needed.

For example, the original material sample added in the segment to be filled may be determined for the segment to be filled in the video editing template that has not been filled with the image material by the user. Then, a first predetermined image material corresponding to the original material sample is obtained, and the first predetermined image material is filled into the segment to be filled.

For another example, a second predetermined image material that may be added to each different segment to be filled may be preset. When the image material for filling the segment to be filled in the video editing template is obtained, the preset second predetermined image material may be obtained, and the second predetermined image material is filled into the segment to be filled that has not been filled by the user. For example, the original material sample or the first predetermined image material filled in the segment to be filled in the video editing template that has not been filled by the user is replaced, such that the second predetermined image material is filled into the segment to be filled.

In this embodiment, the first predetermined image material filled into the segment to be filled that has not been filled with the image material by a user may be obtained based on the original material sample in the segment to be filled. For example, the original material sample in the fill segment may be used as the first predetermined image material filled into the segment to be filled. The predetermined image identifier may also be added to the image picture of the original material sample to distinguish the image material filled by the user, which may facilitate the user to distinguish the predetermined image material in the video editing template and the image material added by the user himself. In this case, optionally, the predetermined image material includes a first predetermined image material. Obtaining an image material for filling a segment to be filled in the video editing template includes: using the original material sample as a first predetermined image material corresponding to the original material sample. Alternatively, a predetermined image identifier is added to the original material sample to obtain a first predetermined image material corresponding to the original material sample. The specific style of the predetermined image identifier may be set as needed, which is not limited in this embodiment. For example, the predetermined image identifier may be a watermark identifier used to indicate that the image material is a predetermined image material.

In some implementations, the effect of the obtained image material may not be considered (for example, not considering what operation is the triggering operation used by the user for indicating a generation of the video editing result), and whether to add the first predetermined image material or the second predetermined image material into the segment to be filled that has not been added with the image material by the user may be preset.

In some embodiments, the effect of the obtained image material may also be considered. Whether to add the first predetermined image material or the second predetermined image material into the second segment to be filled may be determined based on the effect of the obtained image material. In this situation, optionally, the obtaining an image material for filling a segment to be filled in the video editing template includes: if the image material is obtained to generate the video editing draft this time, a first predetermined image material corresponding to an original material sample in the segment to be filled that has not been filled by the user is obtained. The first predetermined image material is used as the predetermined image material for filling the segment to be filled that has not been filled by the user. If the image material is obtained to generate a target video this time, a second predetermined image material is obtained, and the first predetermined image material filled in the segment to be filled that has not been filled by the user is replaced with the second predetermined image material.

Specifically, when the image material for filling the segment to be filled in the video editing template needs to be obtained to generate the video editing draft, the first predetermined image material corresponding to the original material sample in the segment to be filled that has not been filled by the user may be obtained as the predetermined image material for filling the segment to be filled.

When the image material for filling the segment to be filled in the video editing template needs to be obtained to generate the target video, the second predetermined image material may be obtained, and the second predetermined image material is used to replace the first predetermined image material added in the segment to be filled that has not been filled by the user. For example, if the video editing draft has been generated before obtaining the image material to generate the target video at this time (that is, the first predetermined image material has been added to the segment to be filled that has not been filled by the user), the second predetermined image material may be used to replace the first predetermined image material that has been filled into the segment to be filled that has not been filled by the user. If the video editing draft has not been generated before the image material is obtained to generate the target video at this time (that is, what is filled into the segment to be filled that has not been filled by the user is still the original material sample), the second predetermined image material may be used to replace the original material sample in the segment to be filled that has not been filled by the user.

It may be understood that the display style of the filled predetermined image material may be set as needed. For example, the video editing draft may include a main editing track, it may further include a picture-in-picture editing track. When the segment to be filled is located on different tracks, the filled predetermined image material may have different display styles. For example, when the segment to be filled that has not been filled by the user is the segment to be filled on the main editing track, the transparency of the filled predetermined image material may be the first transparency, and the first transparency is greater than 0. When the segment to be filled that has not been filled by the user is the segment to be filled on the picture-in-picture editing track, the transparency of the filled first predetermined image material may be the second transparency, and the transparency of the filled second predetermined image material may be the third transparency. The second transparency is greater than or equal to the third transparency. Optionally, the second transparency may be greater than 0, and the third transparency may be 0.

According to the video editing method provided in this embodiment, a video editing template is obtained, an image material for filling a segment to be filled in the video editing template is obtained, the image material is used to form a video segment of a video editing draft, at least a part of the image material is a predetermined image material, the predetermined image material is used to fill a segment to be filled in the video editing template that has not been filled by a user. A video editing result is generated based on the video editing template and the image material. By adopting the above technical solution, the video editing result can be generated according to the image material filled in each segment to be filled of the video editing template under a condition that the user has not added the image material in at least part of the segments to be filled, the generation manner of the video editing result can be enriched, and the generation difficulty of the video editing result is reduced.

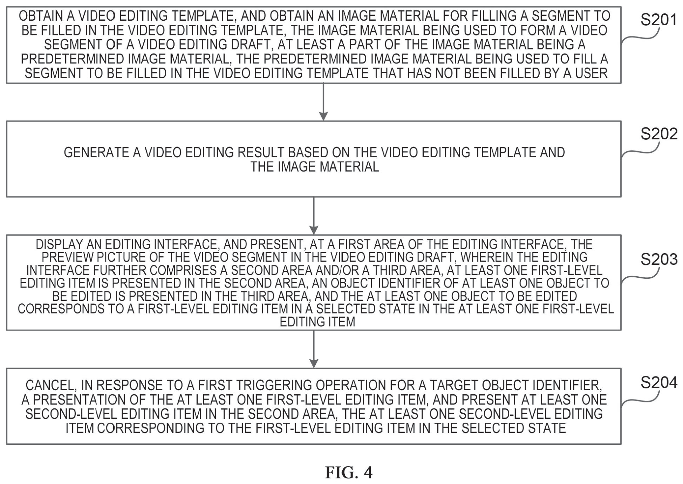

FIG. 4 is a schematic flowchart of another video editing method according to embodiments of the present disclosure. The solution in this embodiment may be combined with one or more optional solutions in the foregoing embodiments. Optionally, after displaying the editing interface, the method further includes: canceling, in response to a first triggering operation for a target object identifier, a presentation of the at least one first-level editing item, and presenting at least one second-level editing item in the second area, the at least one second-level editing item corresponding to the first-level editing item in the selected state.

Correspondingly, as shown in FIG. 4, the video editing method provided in this embodiment may include: S201, obtaining a video editing template, and obtaining an image material for filling a segment to be filled in the video editing template, the image material is used to form a video segment of a video editing draft, at least a part of the image material is a predetermined image material, the predetermined image material is used to fill a segment to be filled in the video editing template that has not been filled by a user. S202: generating a video editing result based on the video editing template and the image material. S203: displaying an editing interface, and presenting, at a first area of the editing interface, the preview picture of the video segment in the video editing draft, wherein the editing interface further includes a second area and/or a third area, at least one first-level editing item is presented in the second area, an object identifier of at least one object to be edited is presented in the third area, and the at least one object to be edited corresponds to a first-level editing item in a selected state in the at least one first-level editing item. S204, canceling, in response to a first triggering operation for a target object identifier, a presentation of the at least one first-level editing item, and presenting at least one second-level editing item in the second area, the at least one second-level editing item corresponding to the first-level editing item in the selected state.

The first triggering operation may be a triggering operation for triggering a certain object identifier presented in the third area. For example, when the first-level editing item in the selected state is a first-level video segment editing item, the first triggering operation may be an operation that triggers a video segment identifier of a first video segment in the third area. When the first-level editing item in the selected state is a first-level audio editing item, the first triggering operation may be an operation that triggers an audio identifier of a certain candidate background audio in the third area. When the first-level editing item in the selected state is a first-level text editing item, the first triggering operation may be an operation that triggers a text identifier of a certain text in the third area. When the first-level editing item in the selected state is a first-level filter editing item, the first triggering operation may be an operation that triggers a filter identifier of a certain candidate filter in the third area. When the first-level editing item in the selected state is a first-level sticker editing item, the first triggering operation may be an operation that triggers a sticker identifier of a certain sticker in the third area.

The target object identifier may be understood as an object identifier triggered by the first triggering operation, which may be a video segment identifier of a certain video segment formed by an image material filled by the user, an audio identifier of a certain candidate background audio, a text identifier of a certain text, a filter identifier of a certain candidate filter, or a sticker identifier of a certain sticker, and the like.

Specifically, when the first triggering operation for a certain object identifier displayed in the third area is received, the first-level editing item in the selected state in the second area may be determined, and the presentation of each first-level editing item presented in the second area is canceled. The second-level editing item of the first-level editing item in the selected state may also be presented in the second area, to facilitate the user to edit the object to be edited corresponding to the target object identifier by using the second-level editing item.

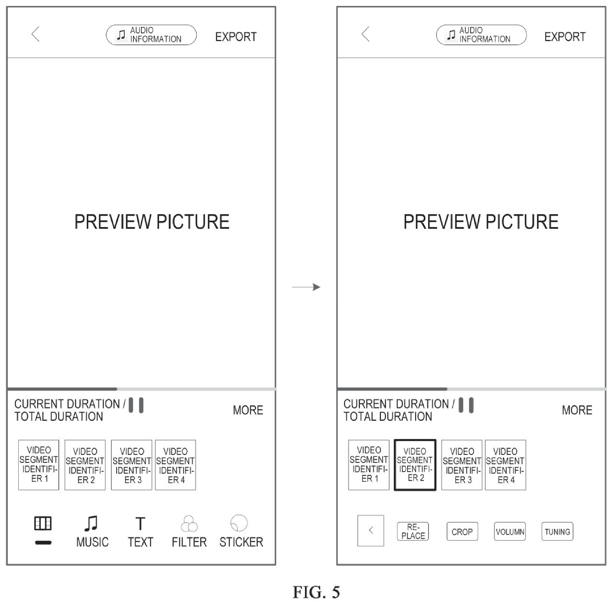

For example, as shown in FIG. 5, when the first-level editing item in the selected state is a first-level video segment editing item, the video segment identifier of the video segment in the video editing draft may be displayed in the third area. When it is detected that the user triggers the video segment identifier of a certain video segment presented in the third area (taking triggering the video segment identifier 2 as an example in FIG. 5), the at least one first-level editing item presented in the second area may be switched to the second-level editing item of the first-level video segment editing item. In addition, the video segment identifier may be further presented as a selected state.

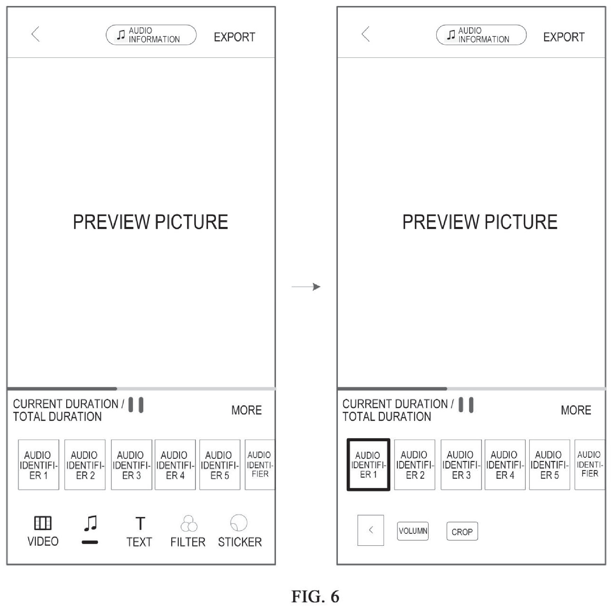

As shown in FIG. 6, when the first-level editing item in the selected state is the first-level audio editing item, the audio identifier of the at least one candidate background audio that may be selected by the user may be presented in the third area. When it is detected that the user triggers the audio identifier of a certain candidate background audio presented in the third area (taking triggering the audio identifier 1 as an example in FIG. 6), the at least one first-level editing item presented in the second area may be switched to the second-level editing item of the first-level audio editing item. In addition, the audio identifier may be further presented as a selected state.

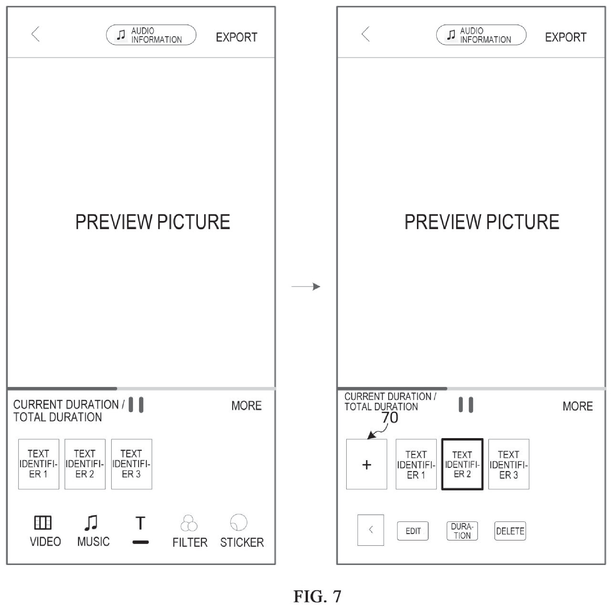

As shown in FIG. 7, when the first-level editing item in the selected state is the first-level text editing item, the text identifier of the at least one text added in the video editing draft may be presented in the third area. When it is detected that the user triggers the text identifier of a certain text presented in the third area (taking triggering the text identifier 2 as an example in FIG. 7), the at least one first-level editing item presented in the second area may be switched to the second-level editing item of the first-level text editing item, and the text identifier may be further presented as the selected state. In addition, when presenting the text identifier of the text added in the video editing template, the text adding control 70 may be further presented, to facilitate the user to add new text into the video editing template by triggering the text adding control 70.

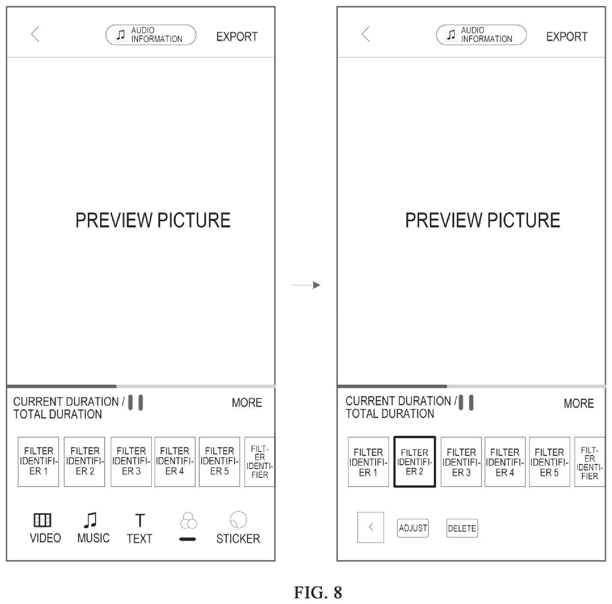

As shown in FIG. 8, when the first-level editing item in the selected state is the first-level filter editing item, the filter identifier of the at least one candidate filter available for the user to select may be presented in the third area. When it is detected that the user triggers the filter identifier of a certain first candidate filter presented in the third area (taking triggering the filter identifier 2 as an example in FIG. 8), the at least one first-level editing item presented in the second area may be switched to the second-level editing item of the first-level filter editing item, and the filter identifier may be further presented as the selected state.

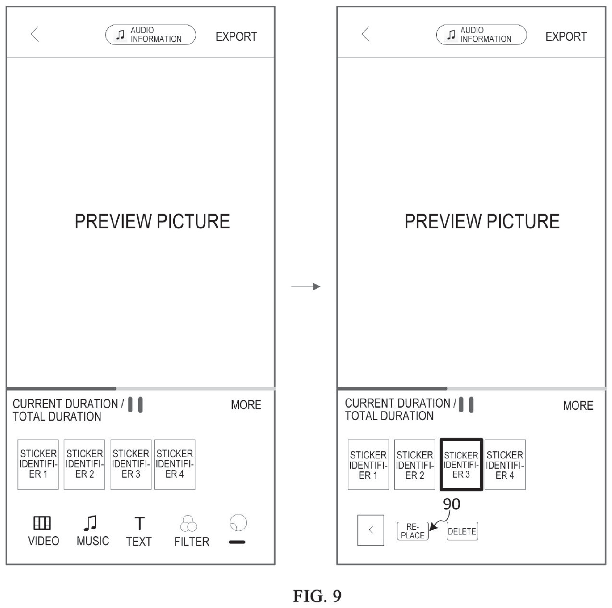

As shown in FIG. 9, when the first-level editing item in the selected state is the first-level sticker editing item, the sticker identifier of the at least one sticker added in the video editing draft may be presented in the third area. When it is detected that the user triggers the sticker identifier of a certain sticker presented in the third area (taking triggering the sticker identifier 3 in FIG. 9 as an example), the at least one first-level editing item presented in the second area may be switched to the second-level editing item of the first-level sticker edit item, and the sticker identifier may be further presented as the selected state.

In some embodiments, when the triggering operation (for example, the first triggering operation) of the video segment identifier of the video segment formed for the image material filled by the user is received, the second-level editing item of the first-level video segment editing item may be presented in the second area, so that the user may edit the video segment. And/or, when a triggering operation for the video segment identifier of the video segment formed by the predetermined image material is received, a material filling interface may be switched to, such that the user may fill the image material into the segment to be filled corresponding to the predetermined image material.

In this situation, optionally, the material filling interface is displayed in response to the second triggering operation for the video segment identifier of the target video segment. The target video segment is a video segment formed by the predetermined image material, and at least one candidate image material is presented in the material filling interface. The predetermined image material corresponding to the target video segment is replaced with the candidate image material selected by the user in response to a material filling operation acting within the material filling interface.

Wherein, the second triggering operation may be a triggering operation for indicating a display of the material filling interface, and may be a triggering operation for a video segment formed by a predetermined image material. For example, an operation of triggering a preview picture of a video segment formed by a certain predetermined image material presented in the first area, or an operation of triggering a video segment identifier of a video segment formed by a predetermined image material presented in the third area. The target video segment may be a video segment corresponding to the second triggering operation, and the target video segment is a video segment formed by the predetermined image material. The candidate image material may be an image material that may be selected for filling into the video editing template. The material filling operation may be an operation for indicating to fill a certain candidate image material. The manner in which the user selects the image material is not limited, for example, the user may manually select a certain image material, or instruct the current application program to automatically select the image material based on a predetermined selection rule via a certain triggering operation.

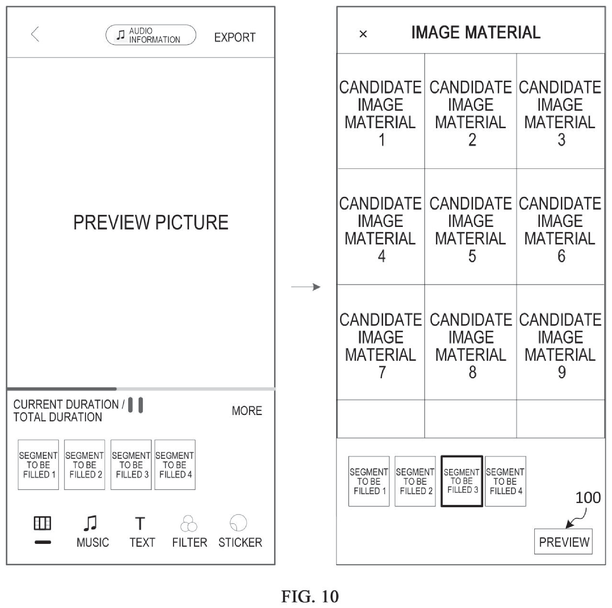

For example, when a second triggering operation for a video segment formed by a predetermined image material is received, the current interface may be switched from an editing interface to a material filling interface, and at least one candidate image material is displayed in the material filling interface. Receiving a second triggering operation for a video segment formed by a certain predetermined image material may be: detecting the user triggering a preview picture of a video segment formed by a certain predetermined image material presented in a first area of the editing interface, or detecting the user triggering a video segment identifier of a video segment formed by a certain predetermined image material presented in a third area of the editing interface. In addition, at least one segment to be filled in the video editing template may be further presented, and a segment to be filled in which the second image material is located is presented as a selected state, as shown in FIG. 10. Therefore, when the material filling operation of the user is received, the image material filled in the segment to be filled may be replaced with the candidate image material for filling indicated by the material filling operation. For example, when it is detected that the user triggers a certain candidate image material in the material filling interface, the image material filled in the segment to be filled may be replaced with the candidate image material triggered by the user.

Optionally, after the replacing the predetermined image material corresponding to the target video segment with the candidate image material selected by the user, further includes: updating the target video segment based on the candidate image material selected by the user, and displaying a preview picture of the updated target video segment in the first area of the editing interface.

In the foregoing embodiments, after the user replaces the predetermined image material filled in a certain segment to be filled with the candidate image material selected by the user, the user may further switch to the editing interface by performing the preview operation to view the preview picture of the video segment formed by the selected candidate image material.

For example, when the preview operation of the user is received, for example, when it is detected that the user triggers the preview control 100 presented in the material filling interface (as shown in FIG. 10), the target video segment in the video editing draft may be updated to the video segment formed by the candidate image material selected by the user. An editing interface is displayed, and a preview picture of the updated target video segment is presented in the first area of the editing interface. For example, the preview picture of the video editing draft may be presented in the first area by using the time node corresponding to the starting point of the updated target video segment in the video editing draft as the starting point. Therefore, the user may quickly preview the effect the video segment formed by the candidate image material filled this time.

In some embodiments, the first-level editing item in the selected state is a first-level sticker editing item, the at least one second-level editing item includes a sticker replacement control, the sticker replacement control is configured to trigger display of a sticker panel, and the method further includes at least one of the following: adjusting, in response to a size adjustment operation for the sticker panel, a display size of the sticker panel; or canceling, in response to a cancel display operation for the sticker panel, display of the sticker panel. The cancel display operation acts on a non-control area outside the sticker panel, and/or acts on a save control presented in the sticker panel.

The size adjustment operation may be a triggering operation for indicating adjusting the size of the sticker panel. For example, the size adjustment operation may include a first size adjustment operation for indicating a reduction of the size of sticker panel and/or a second size adjustment operation for indicating an increase in the size of the sticker panel. The first size adjustment operation may be, for example, an operation of sliding in the first direction in the top area of the sticker panel, or an operation of adjusting a certain sticker presented in the first area in the first area of the editing interface, which may be performed when the sticker panel is displayed as a larger size (for example, the first size). The second size adjustment operation may be, for example, an operation of sliding in a second direction in a top area of the sticker panel, which may be performed when the sticker panel is displayed in a smaller size (e.g., a second size). The cancel display operation may be a triggering operation for indicating to cancel the display of the sticker panel, for example, an operation of triggering a non-control area outside the sticker panel, or an operation of triggering a save control presented in the sticker panel, and the like. Here, the second size may be smaller than the first size. Optionally, when the sticker panel is displayed in the first size, an overlapping area exists between the sticker panel and the first area. When the sticker panel is displayed in the second size, there is no overlap area between the sticker panel and the first area, so as to avoid blocking the preview picture presented in the first area. The first direction and the second direction may be opposite directions. For example, the first direction may be downward, and the second direction may be upward. The non-control area may be an area that is not displayed with a control.

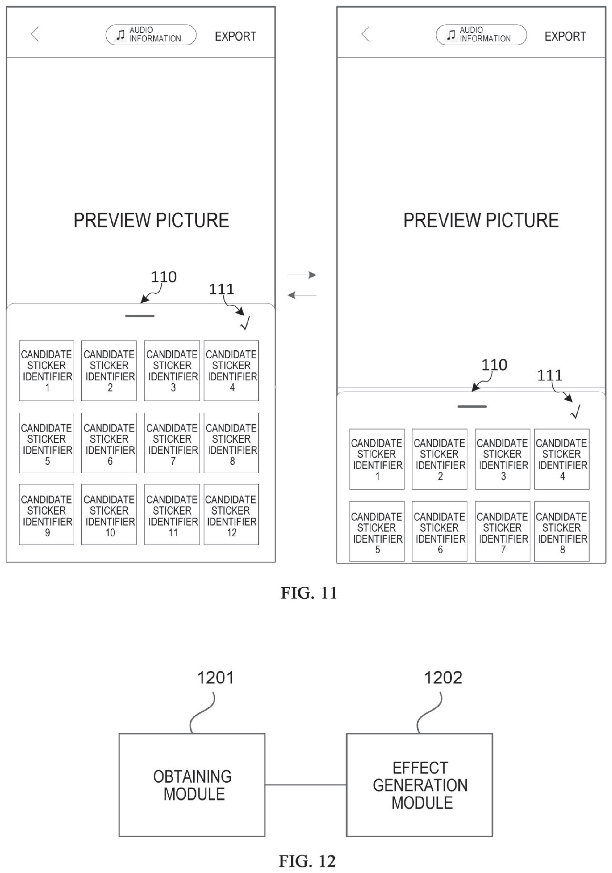

In the foregoing embodiments, when it is detected that the user triggers the sticker identifier of a certain sticker presented in the third area 23, a preview progress of the video editing draft may be adjusted to a preview progress corresponding to the sticker. Thus, the preview picture including the sticker is presented in the first area 20 of the editing interface, and the second-level editing item of the first-level sticker editing item may be presented in the second area 22. The second-level editing item may include, for example, a replacement control 90, as shown in FIG. 9 (the sticker is not shown in FIG. 9). Thus, the sticker panel 110 may be displayed when detecting a user triggering the replacement control 91 shown in the second area 22. As shown in FIG. 11, the sticker panel 110 is displayed in the first size or the second size, and the sticker identifier (that is, the candidate sticker identifier) of the at least one candidate sticker is presented in the sticker panel 110.

After displaying the sticker panel, the user may replace, by triggering the sticker identifier of a certain candidate sticker in the sticker panel, the sticker corresponding to the sticker identifier triggered by the user in the third area with the candidate sticker. The user may also adjust the display size of the sticker panel by performing a size adjustment operation.

For example, as shown in FIG. 11, for the situation where the sticker panel is displayed in the first size, when it is detected that the user slides in the first direction in the top area of the sticker panel, the size of the sticker panel may be reduced from the first size to the second size. Alternatively, for the situation where the sticker panel is displayed in the first size, when it is detected that the user adjusts the size, position, and/or angle and the like of a sticker presented in the first area, the size of the sticker panel may be reduced from the first size to the second size, so as to facilitate the user to adjust the sticker. For the situation where the sticker panel is displayed in the second size, when it is detected that the user slides in the second direction in the top area of the sticker panel, the size of the sticker panel may be increased from the second size to the first size.

After displaying the sticker panel 110, the user may also turn off the sticker panel 110 by performing a cancel display operation. When it is detected that the user triggers the non-control area outside the sticker panel 110, or when it is detected that the user triggers the save control 111 presented in the sticker panel 110 (as shown in FIG. 11), the display of the sticker panel 110 may be canceled.

In some embodiments, the first-level editing item in the selected state is a first-level audio editing item, and the object identifier is an audio identifier of the candidate background audio. After displaying the editing interface, further includes: presenting, in response to an audio editing operation acting within the editing interface, the first-level audio editing item in the selected state, and presenting an audio identifier of at least one candidate background audio in the third area. The audio editing operation acts on the first-level audio editing item or acts within a fourth area of the editing interface, the fourth area being configured to present audio information of a background audio added to the video editing draft.

Wherein, the audio editing operation may be a triggering operation for indicating a presentation of the audio identifier of the candidate background audio, for example, an operation triggering the first-level audio editing item presented in the editing interface, or an operation triggering the fourth area of the editing interface. The fourth area may be an area in the editing interface for presenting audio information of the background audio added to the video editing draft.

Specifically, when receiving the audio editing operation performed by the user (for example, when it is detected that the user triggers the first-level audio editing item 26 (as shown in FIG. 2) presented in the second area 22 of the editing interface, or the fourth area 27 (as shown in FIG. 2) of the editing interface is triggered), the audio identifier of the at least one candidate background audio may be presented in the third area 23 of the editing interface, as shown in FIG. 6. Thus, it may facilitate the user to adjust the added audio in the video editing template.

In the video editing method provided in the embodiments, when a user triggers a first-level editing item, the first-level editing item presented in the editing interface is switched to a presentation of a second-level editing item of the first-level editing item triggered by the user. In this way, the display manner of the second-level editing item can be enriched, blocking of other page content displayed in the editing interface is avoided, and convenience is provided for the user for editing the video editing draft.

FIG. 12 is a structural block diagram of a video editing apparatus according to embodiments of the present disclosure. The apparatus may be implemented by software and/or hardware, and may be configured in an electronic device, and is typically configured in a mobile phone or a tablet computer, and may generate a video preview effect by performing a video editing method in a situation where the user has not filled the image material into at least part of the segments to be filled in the template, for example, generating a new video or previewing a video to be generated in a situation where only a part of segments to be filled in the template are added with the image material. As shown in FIG. 12, the video editing apparatus provided in the embodiments may include: an obtaining module 1201 and an effect generation module 1202. The obtaining module 1201 is configured to obtain a video editing template, and obtain an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user. The effect generation module 1202 is configured to generate a video editing result based on the video editing template and the image material.

In the video editing apparatus provided in this embodiment, a video editing template is obtained by the obtaining module, an image material for filling a segment to be filled in the video editing template is obtained. The image material is used to form a video segment of a video editing draft. At least a part of the image material is a predetermined image material, the predetermined image material being used to fill a segment to be filled in the video editing template that has not been filled by a user. A video editing result is generated by the effect generation module based on the video editing template and the image material. By adopting the above technical solution, the video editing result can be generated according to the image material filled in each segment to be filled of the video editing template under a condition that the user has not added the image material in at least part of the segments to be filled. Therefore, the generation manner of the video editing result can be enriched, and the generation difficulty of the video editing result is reduced.

In the above solution, the predetermined image material may include a first predetermined image material and/or a second predetermined image material. The first predetermined image material corresponds to an original material sample filled in the segment to be filled, and the second predetermined image material is a set image material.

In the foregoing solution, the predetermined image material includes the first predetermined image material, and the obtaining module 1201 may be configured to: use the original material sample as the first predetermined image material corresponding to the original material sample. Alternatively, the first predetermined image material corresponding to the original material sample may be obtained by adding a predetermined image identifier to the original material sample.

In the foregoing solution, the obtaining module 1201 may be configured to: in accordance with that the image material is obtained to generate the video editing draft this time, obtain, as the predetermined image material for filling the segment to be filled that has not been filled by the user, a first predetermined image material corresponding to an original material sample in the segment to be filled that has not been filled by the user; in accordance with that the image material is obtained to generate a target video this time, obtain a second predetermined image material, and replacing, with the second predetermined image material, the first predetermined image material filled in the segment to be filled that has not been filled by the user.

In the above solution, the video editing result may include a preview picture, and the effect generation module 1202 is configured to: generate the video editing draft based on the video editing template and the image material, and present the preview picture of the video segment in the video editing draft.

In the above solution, the effect generation module 1202 may be configured to: display an editing interface, and present, at a first area of the editing interface, the preview picture of the video segment in the video editing draft.

In the above solution, the editing interface may further includes a second area and/or a third area, at least one first-level editing item is presented in the second area, an object identifier of at least one object to be edited is presented in the third area, and the at least one object to be edited corresponds to a first-level editing item in a selected state in the at least one first-level editing item.

Further, the video editing apparatus provided in the embodiments may further include: an editing item presenting module, configured to, after displaying the editing interface, cancel, in response to a first triggering operation for a target object identifier, a presentation of the at least one first-level editing item, and present at least one second-level editing item in the second area, the at least one second-level editing item corresponding to the first-level editing item in the selected state.

In the foregoing solution, the first-level editing item in the selected state is a first-level sticker editing item, the at least one second-level editing item may include a sticker replacement control, the sticker replacement control is configured to trigger display of a sticker panel, and the video editing apparatus provided in the embodiments may further include: a size adjustment module, configured to adjust, in response to a size adjustment operation for the sticker panel, a display size of the sticker panel; and a cancel display module, configured to cancel, in response to a cancel display operation for the sticker panel, display of the sticker panel, the cancel display operation acting on a non-control area outside the sticker panel, and/or acting on a save control presented in the sticker panel.

In the above solution, the first-level editing item in the selected state may be a first-level video segment editing item, the object identifier may be a video segment identifier of a video segment in the video editing draft, and the video editing apparatus provided in the embodiments may further include: an interface display module, configured to display a material filling interface in response to a second triggering operation for a video segment identifier of a target video segment, the target video segment being a video segment formed by the predetermined image material, at least one candidate image material being presented in the material filling interface; and a material filling module, configured to replace, in response to a material filling operation acting within the material filling interface, the predetermined image material corresponding to the target video segment with a candidate image material selected by the user.

Further, the video editing apparatus provided in the embodiments may further include: a preview module, configured to, after replacing the predetermined image material corresponding to the target video segment with the candidate image material selected by the user, update the target video segment based on the candidate image material selected by the user, and present a preview picture of the updated target video segment in the first area of the editing interface.

In the foregoing solution, the first-level editing item in the selected state may be a first-level audio editing item, the object identifier may be an audio identifier of a candidate background audio, and the video editing apparatus provided in the embodiments may further include: an identifier presenting module, configured to, after displaying the editing interface, present, in response to an audio editing operation acting within the editing interface, in response to an audio editing operation acting within the editing interface, the first-level audio editing item in the selected state, and present an audio identifier of at least one candidate background audio in the third area, the audio editing operation acting on the first-level audio editing item or acting within a fourth area of the editing interface, the fourth area being configured to present audio information of a background audio added to the video editing draft.

In the foregoing solution, a preview progress bar may be further presented in the first area, the preview progress bar may be configured to indicate a current preview progress, and the video editing apparatus provided in the embodiments may further include: a progress information presenting module, configured to, after display editing interface, present, in response to a progress adjustment operation for the video editing draft, preview progress information corresponding to the progress adjustment operation at a predetermined position of the first area in an execution process of the progress adjustment operation, and cancel, in response to an execution of the progress adjustment operation being completed, a presentation of the preview progress information.

In the above solution, the effect generation module 1202 may be configured to: generate a target video by processing the image material with the video editing template.

The video editing apparatus provided by the embodiments of the present disclosure may perform the video editing method provided by any embodiment of the present disclosure, and has functional modules and beneficial effects corresponding to performing the video editing method. For technical details not described in detail in the embodiments, reference may be made to the video editing method provided by any embodiment of the present disclosure.

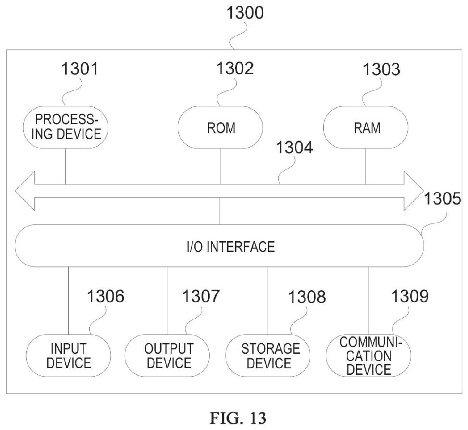

FIG. 13 is a schematic structural diagram of an electronic device (for example, a terminal device) 1300 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an vehicle mounted terminal (for example, an vehicle mounted navigation terminal), and a fixed terminal such as a digital TV, a desktop computer, or the like. The electronic device shown in FIG. 13 is merely an example, and should not impose any limitation on the functions and scope of use of the embodiments of the present disclosure.

As shown in FIG. 13, the electronic device 1300 may include a processing device (for example, a central processing unit, a graphics processor, etc.) 1301, which may perform various appropriate actions and processing according to a program stored in a read-only memory (ROM) 1302 or a program loaded into a random access memory (RAM) 1303 from a storage device 1308. In the RAM 1303, various programs and data required by the operation of the electronic device 1300 are also stored. The processing device 1301, the ROM 1302, and the RAM 1303 are connected to each other through a bus 1304. Input/output (I/O) interface 1305 is also connected to bus 1304.

Generally, the following devices may be connected to the I/O interface 1305: an input device 1306 including, for example, a touch screen, a touchpad, a keyboard, a mouse, a camera, a microphone, an accelerometer, a gyroscope, etc.; an output device 1307 including, for example, a liquid crystal display (LCD), a speaker, a vibrator, etc.; a storage device 1308 including, for example, a magnetic tape, a hard disk, etc.; and a communication device 1309. The communication device 1309 may allow the electronic device 1300 to communicate wirelessly or wired with other devices to exchange data. While FIG. 13 shows an electronic device 1300 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a non-transitory computer readable medium, the computer program including program code for performing the method shown in the flowchart. In such embodiments, the computer program may be downloaded and installed from the network through the communication device 1309, or installed from the storage device 1308, or from the ROM 1302. When the computer program is executed by the processing device 1301, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or component, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In some implementations, the client, server may communicate using any currently known or future developed network protocol, such as HTTP (Hypertext Transfer Protocol), and may be interconnected with any form or medium of digital data communication (e.g., a communication network). Examples of communication networks include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: obtain a video editing template, and obtain an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user; and generate a video editing result based on the video editing template and the image material.

Computer program code for performing the operations of the present disclosure may be written in one or more programming languages, including, but not limited to, object-oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the module does not constitute a limitation on the unit itself in some certain situations.

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, an example 1 provides a video editing method, including: obtaining a video editing template, and obtaining an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user; and generating a video editing result based on the video editing template and the image material.

According to one or more embodiments of the present disclosure, an example 2 according to the method of example 1, wherein the predetermined image material includes a first predetermined image material and/or a second predetermined image material, the first predetermined image material corresponds to an original material sample filled in the segment to be filled, and the second predetermined image material is a set image material.

According to one or more embodiments of the present disclosure, an example 3 according to the method of example 2, wherein the predetermined image material includes the first predetermined image material, and obtaining the image material for filling the segment to be filled in the video editing template includes: using the original material sample as the first predetermined image material corresponding to the original material sample; or obtaining the first predetermined image material corresponding to the original material sample by adding a predetermined image identifier to the original material sample.

According to one or more embodiments of the present disclosure, an example 4 according to the method of example 1, obtaining the image material for filling the segment to be filled in the video editing template includes: in accordance with that the image material is obtained to generate the video editing draft this time, obtaining, as the predetermined image material for filling the segment to be filled that has not been filled by the user, a first predetermined image material corresponding to an original material sample in the segment to be filled that has not been filled by the user; and in accordance with that the image material is obtained to generate a target video this time, obtaining a second predetermined image material, and replacing, with the second predetermined image material, the first predetermined image material filled in the segment to be filled that has not been filled by the user.

According to one or more embodiments of the present disclosure, an example 5 according to any one of examples 1-4, wherein the video editing result includes a preview picture, and generating the video editing result based on the video editing template and the image material includes:
generating the video editing draft based on the video editing template and the image material, and presenting the preview picture of the video segment in the video editing draft.

According to one or more embodiments of the present disclosure, an example 6 according to the method of example 5, wherein presenting the preview picture of the video segment in the video editing draft includes: displaying an editing interface, and presenting, at a first area of the editing interface, the preview picture of the video segment in the video editing draft.

According to one or more embodiments of the present disclosure, an example 7 according to the method of example 6, the editing interface further includes a second area and/or a third area, at least one first-level editing item is presented in the second area, an object identifier of at least one object to be edited is presented in the third area, and the at least one object to be edited corresponds to a first-level editing item in a selected state in the at least one first-level editing item.

According to one or more embodiments of the present disclosure, an example 8 according to the method of example 7, after displaying the editing interface, further includes: canceling, in response to a first triggering operation for a target object identifier, a presentation of the at least one first-level editing item, and presenting at least one second-level editing item in the second area, the at least one second-level editing item corresponding to the first-level editing item in the selected state.

According to one or more embodiments of the present disclosure, an example 9 according to the method of example 8, the first-level editing item in the selected state is a first-level sticker editing item, the at least one second-level editing item includes a sticker replacement control, the sticker replacement control is configured to trigger display of a sticker panel, and the method further includes at least one of the following: adjusting, in response to a size adjustment operation for the sticker panel, a display size of the sticker panel; canceling, in response to a cancel display operation for the sticker panel, display of the sticker panel, the cancel display operation acting on a non-control area outside the sticker panel, and/or acting on a save control presented in the sticker panel.

According to one or more embodiments of the present disclosure, an example 10 according to the method of example 7, wherein the first-level editing item in the selected state is a first-level video segment editing item, the object identifier is a video segment identifier of a video segment in the video editing draft, and after displaying the editing interface, further includes: displaying a material filling interface in response to a second triggering operation for a video segment identifier of a target video segment, the target video segment being a video segment formed by the predetermined image material, at least one candidate image material being presented in the material filling interface; and replacing, in response to a material filling operation acting within the material filling interface, the predetermined image material corresponding to the target video segment with a candidate image material selected by the user.

According to one or more embodiments of the present disclosure, an example 11 according to the method of example 10, after replacing the predetermined image material corresponding to the target video segment with the candidate image material selected by the user, further includes: updating the target video segment based on the candidate image material selected by the user, and presenting a preview picture of the updated target video segment in the first area of the editing interface.

According to one or more embodiments of the present disclosure, an example 12 according to the method of example 7, the first-level editing item in the selected state is a first-level audio editing item, the object identifier is an audio identifier of a candidate background audio, and after displaying the editing interface, further includes: presenting, in response to an audio editing operation acting within the editing interface, the first-level audio editing item in the selected state, and presenting an audio identifier of at least one candidate background audio in the third area, the audio editing operation acting on the first-level audio editing item or acting within a fourth area of the editing interface, the fourth area being configured to present audio information of a background audio added to the video editing draft.

According to one or more embodiments of the present disclosure, an example 13 according to the method of example 6, a preview progress bar is further presented in the first area, the preview progress bar is configured to indicate a current preview progress, and after displaying the editing interface, further includes: presenting, in response to a progress adjustment operation for the video editing draft, preview progress information corresponding to the progress adjustment operation at a predetermined position of the first area in an execution process of the progress adjustment operation, and canceling, in response to an execution of the progress adjustment operation being completed, a presentation of the preview progress information.

According to one or more embodiments of the present disclosure, an example 14 according to the method of any one of examples 1-4, generating the video editing result based on the video editing template and the image material includes: generating a target video by processing the image material with the video editing template.

According to one or more embodiments of the present disclosure, an example 15 provides a video editing apparatus, including: an obtaining module, configured to obtain a video editing template, and obtain an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user; and an effect generation module, configured to generate a video editing result based on the video editing template and the image material.

According to one or more embodiments of the present disclosure, an example 16 provides an electronic device, including: one or more processors; a memory, configured to store one or more programs, the one or more programs, when executed by the one or more processors, causing the one or more processors to implement the video editing method according to any one of examples 1-14.

According to one or more embodiments of the present disclosure, an example 14 provides a computer-readable storage medium having a computer program stored thereon, the program, when executed by a processor, implementing the video editing method according to any one of examples 1-14.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the technical solutions formed by mutually replacing the above features and technical features disclosed in the present disclosure (but not limited to).

Further, while operations are depicted in a particular order, this should not be understood to require that these operations are to be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A video editing method, comprising:
obtaining a video editing template, and obtaining an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user;
generating a video editing result based on the video editing template and the image material.

2. The method of claim 1, wherein the predetermined image material comprises a first predetermined image material and/or a second predetermined image material, the first predetermined image material corresponds to an original material sample filled in the segment to be filled, and the second predetermined image material is a set image material.

3. The method of claim 2, wherein the predetermined image material comprises the first predetermined image material, and obtaining the image material for filling the segment to be filled in the video editing template comprises:
using the original material sample as the first predetermined image material corresponding to the original material sample; or
obtaining the first predetermined image material corresponding to the original material sample by adding a predetermined image identifier to the original material sample.

4. The method of claim 1, wherein obtaining the image material for filling the segment to be filled in the video editing template comprises:
in accordance with that the image material is obtained to generate the video editing draft this time, obtaining, as the predetermined image material for filling the segment to be filled that has not been filled by the user, a first predetermined image material corresponding to an original material sample in the segment to be filled that has not been filled by the user;
in accordance with that the image material is obtained to generate a target video this time, obtaining a second predetermined image material, and replacing, with the second predetermined image material, the first predetermined image material filled in the segment to be filled that has not been filled by the user.

5. The method of any of claims 1-4, wherein the video editing result comprises a preview picture, and generating the video editing result based on the video editing template and the image material comprises:
generating the video editing draft based on the video editing template and the image material, and presenting the preview picture of the video segment in the video editing draft.

6. The method of claim 5, wherein presenting the preview picture of the video segment in the video editing draft comprises:
displaying an editing interface, and presenting, at a first area of the editing interface, the preview picture of the video segment in the video editing draft.

7. The method of claim 6, wherein the editing interface further comprises a second area and/or a third area, at least one first-level editing item is presented in the second area, an object identifier of at least one object to be edited is presented in the third area, and the at least one object to be edited corresponds to a first-level editing item in a selected state in the at least one first-level editing item.

8. The method of claim 7, wherein after displaying the editing interface, the method further comprises:
canceling, in response to a first triggering operation for a target object identifier, a presentation of the at least one first-level editing item, and presenting at least one second-level editing item in the second area, the at least one second-level editing item corresponding to the first-level editing item in the selected state.

9. The method of claim 8, wherein the first-level editing item in the selected state is a first-level sticker editing item, the at least one second-level editing item comprises a sticker replacement control, the sticker replacement control is configured to trigger display of a sticker panel, and the method further comprises at least one of the following:
adjusting, in response to a size adjustment operation for the sticker panel, a display size of the sticker panel;
canceling, in response to a cancel display operation for the sticker panel, display of the sticker panel, the cancel display operation acting on a non-control area outside the sticker panel, and/or acting on a save control presented in the sticker panel.

10. The method of claim 7, wherein the first-level editing item in the selected state is a first-level video segment editing item, the object identifier is a video segment identifier of a video segment in the video editing draft, and after displaying the editing interface, the method further comprises:
displaying a material filling interface in response to a second triggering operation for a video segment identifier of a target video segment, the target video segment being a video segment formed by the predetermined image material, at least one candidate image material being presented in the material filling interface;
replacing, in response to a material filling operation acting within the material filling interface, the predetermined image material corresponding to the target video segment with a candidate image material selected by the user.

11. The method of claim 10, wherein after replacing the predetermined image material corresponding to the target video segment with the candidate image material selected by the user, the method further comprises:
updating the target video segment based on the candidate image material selected by the user, and displaying a preview picture of the updated target video segment in the first area of the editing interface.

12. The method of claim 7, wherein the first-level editing item in the selected state is a first-level audio editing item, the object identifier is an audio identifier of a candidate background audio, and after displaying the editing interface, the method further comprises:
presenting, in response to an audio editing operation acting within the editing interface, the first-level audio editing item in the selected state, and presenting an audio identifier of at least one candidate background audio in the third area, the audio editing operation acting on the first-level audio editing item or acting within a fourth area of the editing interface, the fourth area being configured to present audio information of a background audio added to the video editing draft.

13. The method of claim 6, wherein a preview progress bar is further presented in the first area, the preview progress bar is configured to indicate a current preview progress, and after displaying the editing interface, the method further comprises:
presenting, in response to a progress adjustment operation for the video editing draft, preview progress information corresponding to the progress adjustment operation at a predetermined position of the first area in an execution process of the progress adjustment operation, and canceling, in response to an execution of the progress adjustment operation being completed, a presentation of the preview progress information.

14. The method of any of claims 1-4, wherein generating the video editing result based on the video editing template and the image material comprises:
generating a target video by processing the image material with the video editing template.

15. A video editing apparatus, comprising:
an obtaining module, configured to obtain a video editing template, and obtain an image material for filling a segment to be filled in the video editing template, the image material being used to form a video segment of a video editing draft, at least a part of the image material being a predetermined image material, the predetermined image material being used to fill a segment to be filled in the video editing template that has not been filled by a user;
an effect generation module, configured to generate a video editing result based on the video editing template and the image material.

16. An electronic device, comprising:
at least one processor; and
a memory communicatively connected to the at least one processor; wherein,
the memory stores a computer program executable by the at least one processor, the computer program being executed by the at least one processor to enable the at least one processor to perform the video editing method of any of claims 1-14.

17. A computer-readable storage medium storing computer instructions, wherein the computer instructions, when executed by a processor, implement the video editing method of any of claims 1-14.
